# EUROPEAN PATENT SPECIFICATION

(11) **EP 3 453 916 B1**
(45) Date of publication and mention of the grant of the patent: **03.06.2020**
(21) Application number: 18185155.1
(22) Date of filing: 24.07.2018
(51) Int. Cl.: F16H 1/32, H02K 1/00

(54) **SPEED REDUCER-ATTACHED MOTOR**
AN GESCHWINDIGKEITSREDUZIERER ANGEBRACHTER MOTOR
MOTEUR FIXÉ À UN RÉDUCTEUR DE VITESSE

(30) Priority: 01.08.2017 JP 2017148988
(43) Date of publication of application: 13.03.2019
(73) Proprietor: MITSUBA Corporation, Kiryu-shi Gunma 376-8555 (JP)
(72) Inventor: KOBAYASHI, Motoaki, Gunma, Gunma 376-8555 (JP)
(74) Representative: Cabinet Laurent & Charras

(56) References cited:
- WO-A1-97/42431
- WO-A1-2014/051132
- JP-A- 2015 220 866
- JP-A- 2016 093 000
- JP-B2- 3 078 973

## Description

### BACKGROUND

### Field of the Invention

The present invention relates to a speed reducer-attached motor.

### Background

In general, as a speed reducer-attached motor, one such motor is known which includes a speed reduction mechanism that is operated by a hypocycloid speed reduction method. (for example, refer to Japanese Unexamined Patent Application, First Publication No. 2016-93000). As this speed reduction mechanism of a hypocycloid speed reduction method, one such mechanism is known which includes an eccentric part that is rotated by a rotation output of a motor part, a swing gear that performs a swing movement, also called revolution movement, by the eccentric part and that has an internal tooth and an external tooth, a ring-shaped fixed gear that has an internal tooth which is engaged with an external tooth of an external tooth gear, and an output part that is engaged with the internal tooth of the swing gear and that has an external tooth.

The eccentric part has an eccentric outer circumferential surface that is centered at an eccentric position with respect to a rotation axis line of the motor part, and the swing gear is inserted rotatably in the eccentric outer circumferential surface. The output part is rotated concentrically with the rotation axis line of the motor part.

In such a configuration, when the eccentric part is rotated in accordance with the drive of the motor part, the swing gear performs a swing motion while being engaged with the fixed gear. The swing gear performs a rotation movement at a rotation number, also called rotation number of a rotation movement, having a more decreased speed, which corresponds to engagement first stage, than that of the rotation number of a revolution movement according to the engagement with the fixed gear. The rotation movement having a decreased speed of the swing gear is transmitted to the output part, and the output part is rotated at a rotation number having a more increased speed, which corresponds to engagement second stage, than that of a rotation number of the swing gear.

In such a speed reduction mechanism of a hypocycloid speed reduction method, it is necessary to increase a tooth number in order to ensure a high speed reduction ratio. As a result, it is necessary to set a module of each tooth to be small. When the module is small, although it is possible to increase the tooth number, the tooth becomes small, and the strength of the tooth becomes weak. Therefore, during a power transmission by the speed reduction mechanism, the tooth is deformed and the like, and there is a possibility that a tooth skip may occur.

On the other hand, in the speed reduction mechanism of the hypocycloid speed reduction method, for example, a method is known in which the tooth number of the internal tooth of the swing gear and the tooth number of the external tooth of the output part as the engagement second stage are set to the same number, and a high speed reduction ratio is ensured. In such a method, the speed reduction ratio of the engagement second stage becomes 1:1, and therefore, the speed reduction ratio of the engagement first stage is obtained without change. Therefore, it is possible to set the tooth number of the external tooth of the swing gear and the tooth number of the internal tooth of the fixed gear that constitute the engagement first stage to be small and to set modules of these teeth to be large.

The speed reduction mechanism of the hypocycloid speed reduction method allows the swing gear to perform a swing movement by the eccentric part, and therefore, it is necessary to provide a runout with respect to the swing movement of the swing gear at each of a position between the swing gear and the fixed gear and a position between the swing gear and the output part. In this case, the engagement of teeth of the engagement second stage is performed by the same module setting, and therefore, the runout with respect to the swing movement of the swing gear is provided only by a bottom clearance and a backlash. In such a case, it is necessary to sharpen the tooth, and there is a problem that the strength becomes weak.

In view of the foregoing, an aspect of the present invention provides a speed reducer-attached motor that is capable of ensuring a strength of each gear sufficiently while ensuring a sufficient speed reduction ratio in a speed reducer-attached motor of a hypocycloid speed reduction method.

### SUMMARY

A speed reducer-attached motor according to an aspect of the present invention includes: a motor part; a fixation shaft that is provided at a rotation center of the motor part; an eccentric part that is provided on the fixation shaft, that has an eccentric outer circumferential surface which is centered at an eccentric position decentered with respect to the rotation center, and that is configured to receive a power of the motor part and is rotated; a swing gear that is fixed to the eccentric outer circumferential surface and that has a first internal tooth and a first external tooth; a fixed gear that has a second internal tooth which is engaged with the first external tooth of the swing gear; and an output gear that has a second external tooth which is engaged with the first internal tooth of the swing gear, that is rotated concentrically with the fixation shaft, and that is configured to output a power to an external apparatus, wherein each of modules of the first internal tooth and the second external tooth is set to be different from modules of the first external tooth and the second internal tooth, and a tooth number of the second external tooth is set to be the same as a tooth number of the first internal tooth.

In the above speed reducer-attached motor, each of the modules of the first internal tooth and the second external tooth may be set to be larger than the modules of the first external tooth and the second internal tooth.

According to such a configuration, it is possible to set the tooth number of the second external tooth and the tooth number of the first internal tooth that constitute the engagement second stage to be the same number and to be smaller than the tooth numbers of the first external tooth and the second internal tooth that constitute the engagement first stage. As a result, it is possible to form each of the second external tooth and the first internal tooth to be large, and it is possible to enhance strengths of the second external tooth and the first internal tooth.

Further, it is possible to ensure a sufficient speed reduction ratio by setting the speed reduction ratio of the first external tooth and the second internal tooth of the engagement first stage to be large.

In the above speed reducer-attached motor, the module of the second external tooth may be set to be smaller than the module of the first internal tooth.

According to such a configuration, when providing a runout with respect to the swing movement of the swing gear and considering an engagement adjustment amount between the second external tooth and the first internal tooth, it is possible to make the engagement adjustment amount by the backlash small as much as possible. Therefore, it is possible to form the second external tooth and the first internal tooth to be as large as possible.

According to an aspect of the present invention, it is possible to set the tooth number of the second external tooth and the tooth number of the first internal tooth that constitute the engagement second stage to be the same number and to be smaller than the tooth numbers of the first external tooth and the second internal tooth that constitute the engagement first stage. As a result, it is possible to form each of the second external tooth and the first internal tooth to be large, and it is possible to enhance strengths of the second external tooth and the first internal tooth.

Further, it is possible to ensure a sufficient speed reduction ratio by setting speed reduction ratios of the first external tooth and the second internal tooth of the engagement first stage to be large.

### BRIEF DESCRIPTION OF THE DRAWINGS

FIG. 1 is a perspective view of a speed reducer-attached motor in an embodiment of the present invention.
FIG. 2 is an exploded perspective view of the speed reducer-attached motor in the embodiment of the present invention.
FIG. 3 is a plan view seen from an upper side of a speed reduction mechanism in the embodiment of the present invention.
FIG. 4 is a graph showing a module and a tooth number of each tooth in the embodiment of the present invention.
FIG. 5 is a plan view showing a tooth engagement state of an engagement first stage and an engagement second stage of the speed reduction mechanism in the embodiment of the present invention.
FIG. 6 is a graph showing a module and a tooth number of each tooth of an engagement first stage and an engagement second stage of a hypocycloid speed reduction mechanism of the related art.
FIG. 7 is a plan view showing a tooth engagement state of the engagement second stage in the hypocycloid speed reduction mechanism of the related art.
FIG. 8 is a graph comparing changes in a rotation number and a torque of an output shaft in the embodiment of the present invention to changes in a rotation number and a torque of an output shaft of the related art.

### BRIEF DESCRIPTION OF THE MAIN REFERENCE NUMERALS

1: speed reducer-attached motor
2: main shaft member also called fixation shaft
10: motor part
60: eccentric shaft
67: eccentric part
67a: outer circumferential surface also called eccentric outer circumferential surface
100: speed reduction mechanism
102: ring gear also called fixation gear
102a: internal tooth also called second internal tooth
103: swing gear
103b: external tooth also called first external tooth
103d: internal tooth also called first internal tooth
104: output gear
104a: external tooth also called second external tooth

### DESCRIPTION OF THE EMBODIMENTS

Next, an embodiment of the present invention is described with reference to the drawings.

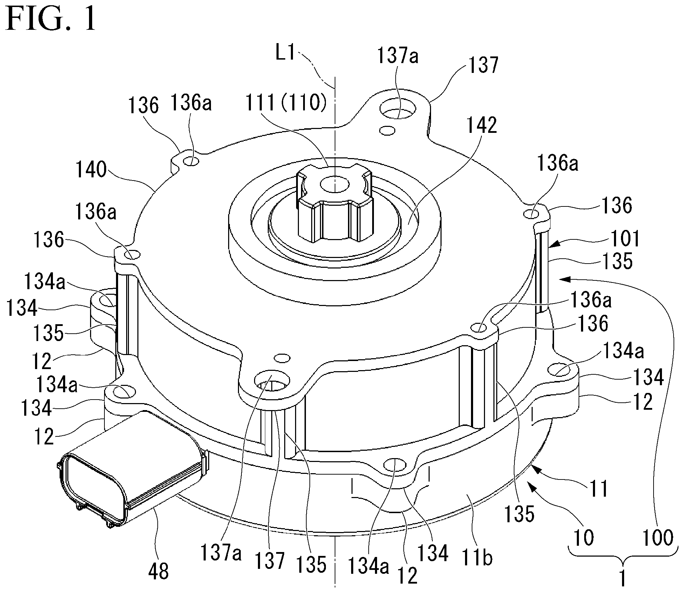

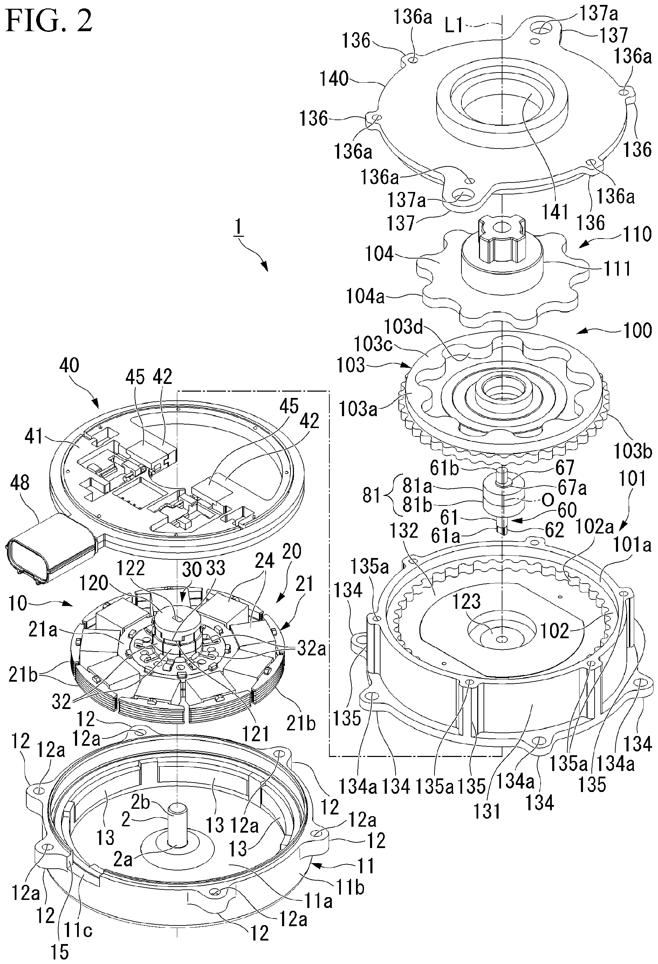

FIG. 1 is a perspective view of a speed reducer-attached motor 1. FIG. 2 is an exploded perspective view of the speed reducer-attached motor 1.

As shown in FIG. 1 and FIG. 2, the speed reducer-attached motor 1 includes a motor part 10 having an oblate shape and constituted as a DC brush-attached motor and a speed reduction mechanism 100 to which a rotation output of the motor part 10 is transmitted.

A motor shaft line, also called rotation shaft line, L1 which is a rotation center of the motor part 10 is matched with a rotation center, also called shaft line, of an output shaft 111 of an output part 110.

In the following description, for ease of explanation, a side from which an output is taken out from the output shaft 111 is referred to as an upper side, corresponding to upper side in FIG. 1 and FIG. 2, and the other side is referred to as a lower side, corresponding to lower side in FIG. 1 and FIG. 2. That is, the motor part 10 is arranged on the lower side, and the speed reduction mechanism 100 is arranged on the upper side. A direction along the motor shaft line L1 is simply referred to as an axial direction. A direction around the motor shaft line L1 is simply referred to as a circumferential direction. A direction orthogonal to the motor shaft line L1 is referred to as a radial direction.

The speed reducer-attached motor 1 has a motor housing 11 that has a bottom wall 11a and a circumferential wall 11b and that has a substantially tube shape having a bottom and a gear casing 101 that is joined to the motor housing 11 as a hull body. Substantially all of mechanism elements of the speed reducer-attached motor 1 are accommodated in a space that is surrounded by the motor housing 11 and the gear casing 101.

A recess part 15 that receives a connector 48 described later is formed on the circumferential wall 11b of the motor housing 11 on an opening edge side. A plurality of bolt seats 12 is formed on the circumferential wall 11b of the motor housing 11 on the opening edge side such that the plurality of bolt seats 12 protrude toward a radially outward direction. Each bolt seat 12 is used for fastening and fixing the motor housing 11 and the gear casing 101 to each other by a bolt (not shown). A female screw part 12a is engraved on each bolt seat 12. The bolt seats 12 are arranged at a substantially equal interval in a circumferential direction.

A plurality of (for example, six in the embodiment) motor magnets, also called permanent magnet 13 are arranged on an inner circumferential surface of the circumferential wall 11b of the motor housing 11. A cross-section of the motor magnet 13 is formed in an arc shape. North and south poles are alternately arranged in a circumferential direction on the motor magnet 13.

The motor magnet 13 may be formed in a ring shape, and a plurality of magnetic poles may be formed on the motor magnet 13.

A main shaft member 2, also called fixation shaft is provided to stand at a center in a radial direction of the bottom wall 11a of the motor housing 11. A base end 2a of the main shaft member 2 is fixed to a middle support part 11c of the bottom wall 11a. A shaft center of the main shaft member 2 is set to be concentric with the motor shaft line L1. An armature 20 is supported rotatably around the motor shaft line L1 by the main shaft member 2.

The armature 20 is arranged concentrically with the main shaft member 2 on an inner circumferential side of the motor magnet 13 of the motor housing 11. The armature 20 is arranged inside the motor housing 11 in a state of surrounding the main shaft member 2. The main shaft member 2 penetrates through a center part in a radial direction of the armature 20. A front end 2b of the main shaft member 2 protrudes from a middle opening of the gear casing 101.

The armature 20 includes an armature core 21 around which an armature coil 24 is winded and a commutator 30 that is arranged on an upper side of the armature core 21 and at a middle part in a radial direction.

The armature core 21 is formed, for example, by axially laminating a plurality of electromagnetic steel sheets that are formed by press forming in the same shape. The armature core 21 has a core main body 21a having a substantially annular shape. A plurality of (for example, nine in the present embodiment) teeth 21b having a substantially T shape in a plan view in the axial direction are formed radially at an equal interval in the circumferential direction on the outer side in the radial direction of the core main body 21a. The armature coil 24 is winded around each of the teeth 21b. An end of each armature coil 24 is drawn toward the commutator 30 side.

The commutator 30 is formed in a substantially cylinder shape. The main shaft member 2 is inserted in the middle part in the radial direction of the commutator 30. The commutator 30 is rotated with the armature core 21 in an integrated manner around the motor shaft line L1.

The commutator 30 has a plurality of (for example, nine in the present embodiment) segments 32 that are arranged side by side in the circumferential direction on the outer circumferential surface. The segments 32 are formed of a metal piece and are arranged in a state of being insulated from each other. A riser 32a that is bent and extends toward the outside in the radial direction is integrally molded on a lower end of each segment 32. The end of the armature coil 24 is connected to the riser 32a.

A power feeding device 40 for feeding electric power to the armature 20 is arranged on an upper side of the armature 20. The power feeding device 40 has a power feeding housing 41 that is made of an insulating resin and that is formed in a substantially circular plate shape so as to surround the commutator 30. The power feeding housing 41 is stored in an inner circumferential surface on an opening edge side of the motor housing 11. A brush holder 42 is integrally molded on the power feeding housing 41. A pair of brushes 45 is supported slidably in the radial direction by the brush holder 42.

The brush 45 is biased toward a center, corresponding to the segment 32 of the commutator 30, in the radial direction by a spring (not shown). The pair of brushes 45 are arranged at a position that corresponds to the segment 32. Thereby, front ends of the pair of brushes 45 are in slidably contact with the segment 32 of the commutator 30. The pair of brushes 45 are electrically connected to the connector 48 that is integrally molded on one side of the power feeding housing 41.

The connector 48 protrudes toward the more outer side in the radial direction than the motor housing 11 via the recess part 15 that is formed on an opening edge of the motor housing 11. The connector 48 is formed such that a connector that extends from an external electric source (not shown) is capable of being fitted to and being attached to the connector 48. Thereby, the electric power of the external electric source (not shown) is supplied to the segment 32 of the commutator 30 via the brush 45 and is further supplied to the armature coil 24.

An eccentric shaft 60 is connected onto the commutator 30 via a joint part 120 that is formed in a substantially circular plate shape.

A plurality of protrusion parts 121 protruding toward the commutator 30 side are formed on the joint part 120. On the other hand, a recess part 33 to which the protrusion part 121 is capable of being fitted is formed on an upper surface of the commutator 30. The protrusion part 121 of the joint part 120 and the recess part 33 of the commutator 30 are fitted to each other, and thereby, the commutator 30 and the joint part 120 are integrally rotated.

A fitting hole 122 having a substantially rectangle shape is formed on the center, corresponding to the motor shaft line L1, in the radial direction of the joint part 120. A lower end of the eccentric shaft 60 is fitted to the fitting hole 122.

The eccentric shaft 60 constitutes part of the speed reduction mechanism 100. The eccentric shaft 60 has a shaft main body 61 concentrically with the motor shaft line L1. A lower end 61a of the shaft main body 61 is chamfered from two directions, thereby a fit shaft part 62 that is capable of being fitted to the fitting hole 122 of the joint part 120 is formed on the lower end 61a.

An eccentric part 67 is integrally molded on the middle part in the axial direction excluding the lower end 61a and an upper end 61b of the shaft main body 61. The eccentric part 67 is formed in a cylinder shape. That is, an outer circumferential surface 67a of the eccentric part 67 is formed of a cylindrical surface having a center O at an eccentric position with respect to the motor shaft line L1.

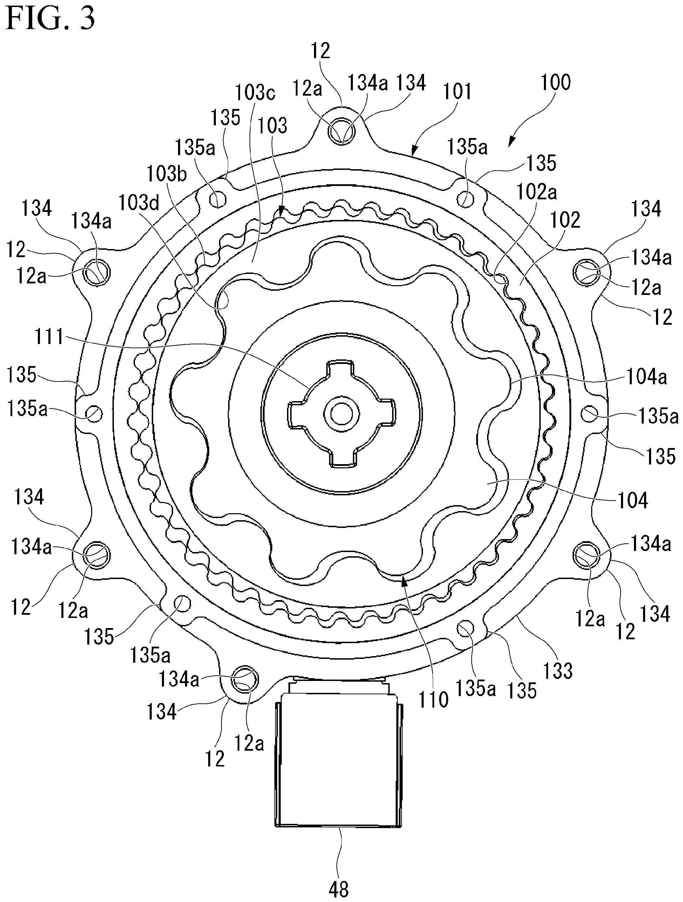

FIG. 3 is a plan view seen from an upper side of the speed reduction mechanism 100.

As shown in FIG. 2 and FIG. 3, the speed reduction mechanism 100 is formed as a so-called hypocycloid speed reduction mechanism. The speed reduction mechanism 100 includes the eccentric shaft 60, a gear casing 101 that covers the power feeding device 40 from the upper side, a ring gear 102, also called fixed gear, that is fixed inside the gear casing 101, a swing gear 103 that is engaged with the ring gear 102, and the output part 110 that is engaged with the swing gear 103.

The gear casing 101 has a cylinder part 131 that is formed in a substantially cylinder shape and a partition wall part 132 that has a substantially circular plate shape and that is integrally molded at substantially the center in the axial direction on the inner circumferential surface side of the cylinder part 131.

The diameter of the outer circumferential surface of the cylinder part 131 is set to be slightly smaller than the diameter of the outer circumferential surface of the circumferential wall 11b of the motor housing 11. A plurality of bolt seats 135 that extend in the axial direction is integrally molded on the outer circumferential surface of the cylinder part 131. The bolt seats 135 are used for fastening and fixing a cover 140 described later to the gear casing 101 by a bolt (not shown). The bolt seats 135 are formed throughout the entire region in the axial direction of the cylinder part 131 and are arranged at an equal interval in the circumferential direction. A female screw part 135a is engraved along the axial direction on each bolt seat 135.

An outer flange part 133 is formed on an end portion on the motor housing 11 side of the cylinder part 131. The outer flange part 133 is overlapped with an opening end of the motor housing 11. A bolt seat 134 is formed on the outer flange part 133 at each of positions that correspond to the bolt seats 12 of the motor housing 11 such that the bolt seat 134 protrudes toward a radially outward direction. The bolt seats 12 and 134 are overlapped with each other in the axial direction. A bolt insertion hole 134a is formed on each bolt seat 134 on the gear casing 101 side. A bolt (not shown) is threaded into the female screw part 12a that is engraved on the bolt seat 12 of the motor housing 11 via the bolt insertion hole 134a. Thereby, the motor housing 11 and the gear casing 101 are fastened and fixed to each other.

The partition wall part 132 partitions the gear casing 101 into: a motor storage part recess portion (not shown) in which the power feeding device 40 and the commutator 30 of the motor part 10 are stored; and a gear storage recess part 101a in which the ring gear 102, the swing gear 103, and the output part 110 are stored. The ring gear 102 is internally fitted and fixed to the gear storage recess part 101a of the gear casing 101.

The ring gear 102 has an internal tooth 102a, also called second internal tooth, that is concentric with the motor shaft line L1.

A bearing 123 is provided at the center in the radial direction of the partition wall part 132. A region closer to the lower end 61a in the shaft main body 61 of the eccentric shaft 60 than the eccentric part 67 is supported rotatably by the bearing 123. The eccentric part 67 of the eccentric shaft 60 is in a state of protruding toward the gear storage recess part 101a side from the partition wall part 132.

The swing gear 103 is rotatably supported by the eccentric part 67 via two bearings 81a, 81b.

The swing gear 103 has a gear main body 103a having a substantially circular plate shape and is arranged on an inner side in the radial direction of the ring gear 102. Outer circumferential surfaces of the two bearings 81 are fitted to the center in the radial direction of the gear main body 103a.

An external tooth 103b, also called first external tooth, that is engaged with the internal tooth 102a of the ring gear 102 is formed on an outer circumferential part of the gear main body 103a. An internal tooth ring 103c is provided to stand on the gear main body 103a. The outer diameter of the internal tooth ring 103c is set to be smaller than the gear main body 103a. An internal tooth 103d , also called first internal tooth, is formed on an inner circumferential surface of the internal tooth ring 103c.

The output part 110 is arranged on a more inner side in the radial direction than the internal tooth ring 103c and on the gear main body 103a of the swing gear 103 that is formed in this way.

The output part 110 is formed of an output shaft 111 that is formed in a substantially cylinder shape which is concentric with the motor shaft line L1 and an output gear 104 that is integrally molded on a lower end of the output shaft 111. A bearing (not shown) is provided on the center in the radial direction of the output gear 104. A region closer to the upper end 61b in the shaft main body 61 of the eccentric shaft 60 than the eccentric part 67 is supported rotatably by the bearing. An external tooth 104a, also called second external tooth, that is concentric with the motor shaft line L1 is formed on an outer circumferential part of the output gear 104. The external tooth 104a is engaged with the internal tooth 103d of the swing gear 103.

The cover 140 is attached to an upper end of the gear casing 101 in a state where the ring gear 102, the swing gear 103, and the output part 110 are stored inside the gear casing 101.

The cover 140 is formed in a substantially circular plate shape so as to close an opening of the cylinder part 131 of the gear casing 101. A bolt seat 136 is formed on an outer circumferential edge of the cover 140 at each of positions that correspond to the bolt seats 135 of the gear casing 101 such that the bolt seat 136 protrudes toward a radially outward direction. A bolt insertion hole 136a that communicates with the female screw part 135a of the gear casing 101 is formed on each bolt seat 136. A bolt (not shown) is threaded into the female screw part 135a of the gear casing 101 via the bolt insertion hole 136a. Thereby, the gear casing 101 and the cover 140 are fastened and fixed to each other.

An attachment tongue piece 137 is formed on an outer circumferential edge of the cover 140 at positions that correspond to the two bolt seats 136 that are arranged to be opposed centering the motor shaft line L1 such that the attachment tongue piece 137 protrudes toward a radially outward direction. The attachment tongue piece 137 is used when attaching the speed reducer-attached motor 1 to an external apparatus (not shown) and the like. A bolt insertion hole 137a through which a bolt (not shown) is capable of being inserted is formed on the attachment tongue piece 137.

A penetration hole 141 through which the output shaft 111 is capable of being inserted is formed on the center in the radial direction of the cover 140. The output shaft 111 protrudes axially outward via the penetration hole 141.

A space between the output shaft 111 and the penetration hole 141 of the cover 140 is sealed by a seal member 142 (refer to FIG. 1).

Next, an operation of the speed reducer-attached motor 1 is described.

First, an operation of the motor part 10 is described.

When the connector 48 is electrically connected to the external electric source, also called external control apparatus, (not shown), electric power is fed to the armature coil 24 via the connector 48, the brush 45, and the segment 32. Then, a predetermined magnetic field is generated at the armature core 21. Then, a magnetic attraction force or a repulsion force works between this magnetic field and the motor magnet 13, and the armature 20 is rotated. According to this rotation, the segment 32 with which the brush 45 is in slidably contact is sequentially changed, and so-called rectification is performed in which the direction of a current that flows through the armature coil 24 is switched. Thereby, the armature 20 is continuously rotated. When the armature 20 is continuously rotated, the speed reduction mechanism 100 that is connected to the commutator 30 is operated.

Next, an operation of the speed reduction mechanism 100 is described.

By the rotation of the armature 20, the eccentric shaft 60 is rotated via the joint part 120 that is attached to the commutator 30. When the eccentric shaft 60 is rotated, the swing gear 103 is rotated in response to the rotation. The swing gear 103 is provided rotatably via the bearings 81a, 81b with respect to the eccentric part 67 of the eccentric shaft 60, and the external tooth 103b of the swing gear 103 is engaged with the internal tooth 102a of the ring gear 102. Therefore, the swing gear 103 revolves around the motor shaft line L1 and is rotated such that the speed is reduced with respect to the eccentric shaft 60 around the center O (refer to FIG. 2) of the eccentric part 67, which corresponds to engagement first stage.

By the swinging rotation of the swing gear 103, power is transmitted, which correspond to engagement second stage, from the swing gear 103 to the output part 110 that is engaged with the internal tooth 103d of the swing gear 103, and the output part 110 outputs an output.

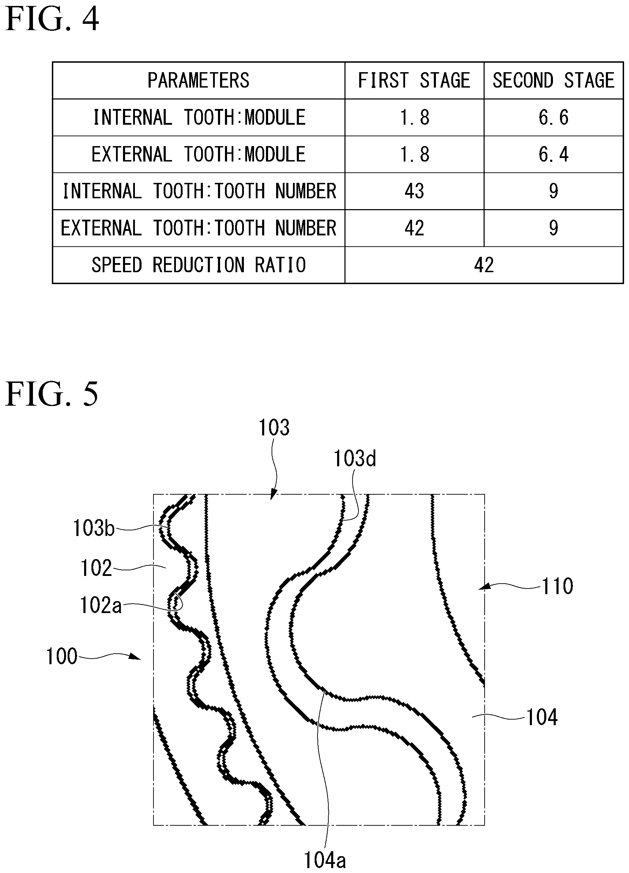

With reference to FIG. 4, the tooth number and the module of the internal tooth 102a of the ring gear 102 and the external tooth 103b of the swing gear 103 that constitute the engagement first stage are described, and the tooth number and the module of the internal tooth 103d of the swing gear 103 and the external tooth 104a of the output gear 104 that constitute the engagement second stage are described.

FIG. 4 is a graph showing the module and the tooth number of each of the teeth 102a, 103b, 103d, 104a.

As shown in FIG. 4, the tooth number of the internal tooth 102a of the ring gear 102 that constitutes the engagement first stage is set to 43. The tooth number of the external tooth 103b of the swing gear 103 is set to 42. Each of the modules of the internal tooth 102a and the external tooth 103b is set to 1.8. That is, in the engagement first stage, the tooth numbers of the teeth 102a, 103b are set to be different from each other, and the modules are set to be identical.

On the other hand, each of tooth numbers of the internal tooth 103d of the swing gear 103 and the external tooth 104a of the output gear 104 that constitute the engagement second stage is set to 9. The module of the internal tooth 103d is set to 6.6, and the module of the external tooth 104a is set to 6.4. That is, in the engagement second stage, the tooth numbers of the teeth 103d, 104a are set to be identical, and the modules are set to be different from each other.

The modules of the teeth 103d, 104a of the engagement second stage are set to be larger than the modules of the teeth 102a, 103b of the engagement first stage that is arranged at a more outside position in the radial direction than the engagement second stage.

With respect to the internal tooth 103d of the swing gear 103 and the external tooth 104a of the output gear 104 that constitute the engagement second stage, the module of the internal tooth 103d is set to be larger than the module of the external tooth 104a.

The modules of the teeth 103d, 104a of the engagement second stage are determined based on an eccentric amount, corresponding to eccentric amount of the center O of the outer circumferential surface 67a with respect to the motor shaft line L1, of the eccentric part 67. The engagement of the teeth 103d, 104a of the engagement second stage is adjusted also in consideration of a backlash.

In this way, although the internal tooth 103d of the swing gear 103 and the external tooth 104a of the output gear 104 that constitute the engagement second stage are provided such that the tooth numbers are identical, by setting the modules to a different value, an output is obtained without changing the speed reduction ratio of the first stage. Further, the modules of the teeth 102a, 103b of the engagement first stage are set to be small, and the tooth numbers of the teeth 102a, 103b are set to be as large as possible. On the other hand, it is possible to set the tooth numbers of the teeth 103d, 104a of the engagement second stage to be smaller than the tooth numbers of the teeth 102a, 103b of the engagement first stage that is arranged at a more outside position in the radial direction than the engagement second stage.

As a result, as shown in FIG. 5, it is possible to form the teeth 103d, 104a of the engagement second stage to be large compared to the teeth 102a, 103b of the engagement first stage, and it is possible to enhance strengths. Further, it is possible to ensure a sufficient speed reduction ratio by setting the speed reduction ratio of the engagement first stage to be large.

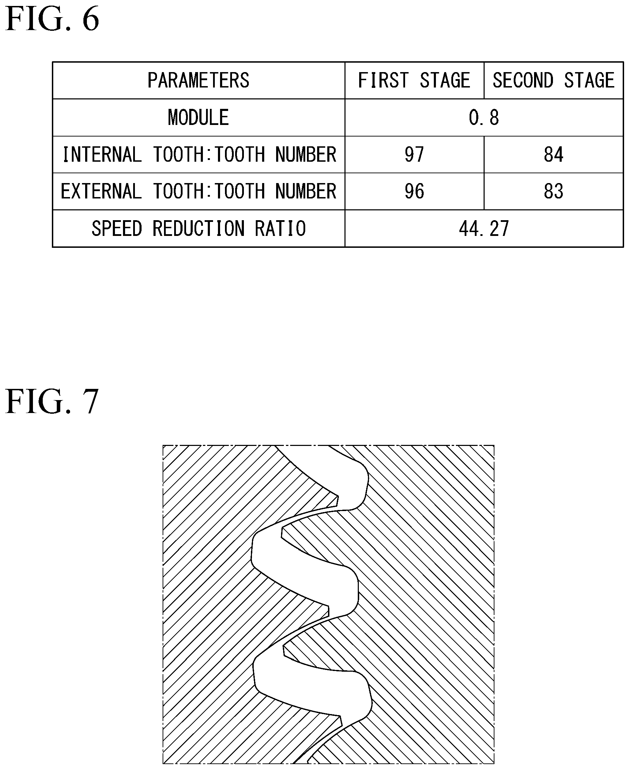

With reference to FIG. 6 and FIG. 7, the tooth number and the module of the related art of the hypocycloid speed reduction mechanism are described, and differences from the present embodiment are described.

FIG. 6 is a graph showing the module and the tooth number of each tooth of the engagement first stage and the engagement second stage of a hypocycloid speed reduction mechanism of the related art. FIG. 7 is a plan view showing a tooth engagement state of the engagement second stage in the hypocycloid speed reduction mechanism of the related art.

A general speed reduction mechanism sets the tooth numbers of two engaged teeth to be different from each other and thereby obtains a speed reduction ratio. Therefore, as shown in FIG. 6, the hypocycloid speed reduction mechanism of the related art sets all of the modules of the engagement first stage and the engagement second stage to be identical and sets the tooth number of the internal tooth and the tooth number of the external tooth of each engagement stage to be different from each other. The numerical values shown in the graph of FIG. 6 show an example of a hypocycloid speed reduction mechanism in which the speed reduction ratio is close to the speed reduction ratio of the present embodiment.

When each tooth of the hypocycloid speed reduction mechanism of the related art is allowed to have the value shown in the graph of FIG. 6, as shown in FIG. 7, each tooth is small and has a sharp shape compared to the present embodiment. In this way, compared to the related art, it is possible to form the teeth 103d, 104a of the engagement second stage of the present embodiment to be large, and it is possible to enhance the strength.

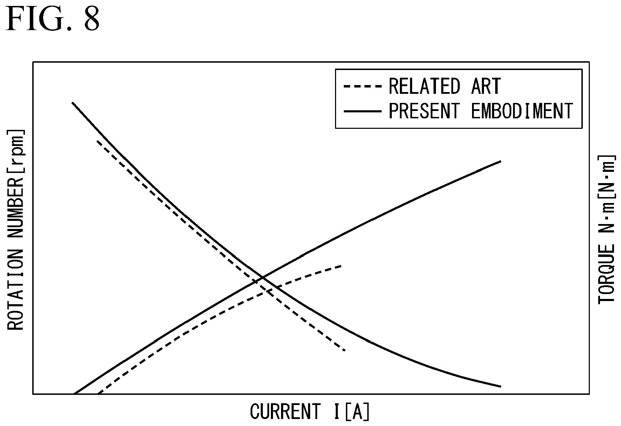

FIG. 8 is a graph showing changes in the rotation number of the output shaft 111 and the torque of the output shaft 111 when the vertical axes represent the rotation number [rpm] of the output shaft 111 and the torque [N·m] of the output shaft 111, and the horizontal axis represents a current value [A] that is fed to the motor part 10. FIG. 8 compares the related art and the present embodiment.

As shown in FIG. 8, it is possible to confirm that, according to the present embodiment, since it is possible to form the teeth 103d, 104a of the engagement second stage to be large, and it is possible to enhance the strength, it is possible to transmit power without a tooth skip compared to the related art, and therefore, it is possible to improve the torque.

In the present embodiment, with respect to the internal tooth 103d of the swing gear 103 and the external tooth 104a of the output gear 104 of the engagement second stage, the module of the internal tooth 103d is set to be larger than the module of the external tooth 104a. Therefore, when providing a runout with respect to the swing movement of the swing gear 103 and considering the engagement adjustment amount between the internal tooth 103d and the external tooth 104a, it is possible to make the effect of the engagement adjustment amount by the backlash small as much as possible. Accordingly, it is possible to form the internal tooth 103d and the external tooth 104a to be as large as possible.

The present invention is not limited to the embodiment described above, and various changes can be added to the embodiment described above without departing from the scope of the invention.

For example, the above embodiment is described using an example in which the armature core 21 of the motor part 10 has nine teeth 21b, and the commutator 30 has nine segments 32. However, the embodiment is not limited thereto, and it is possible to arbitrarily set the number of teeth 21b and the number of segments 32.

The above embodiment is described using an example in which the armature core 21 is formed, for example, by axially laminating a plurality of electromagnetic steel sheets that are formed by press forming in the same shape.

However, the embodiment is not limited thereto, and the armature core 21 may be formed by pressure molding of a soft magnetic powder.

The above embodiment is described using an example in which the tooth number of the second internal tooth 102a of the ring gear 102 that constitutes the engagement first stage is set to 43, and the tooth number of the first external tooth 103b of the swing gear 103 is set to 42. The above embodiment is described using an example in which each of the tooth numbers of the first internal tooth 103d of the swing gear 103 and the second external tooth 104a of the output gear 104 that constitute the engagement second stage is set to 9. However, the embodiment is not limited thereto, and it is possible to arbitrarily set the tooth numbers of the second internal tooth 102a of the ring gear 102 and the first external tooth 103b of the swing gear 103. The tooth numbers of the first internal tooth 103d of the swing gear 103 and the second external tooth 104a of the output gear 104 may be the same as each other and can be arbitrarily set.

The above embodiment is described using an example in which each of the modules of the second internal tooth 102a of the ring gear 102 and the first external tooth 103b of the swing gear 103 is set to 1.8. The above embodiment is described using an example in which the module of the first internal tooth 103d of the swing gear 103 is set to 6.6, and the module of the second external tooth 104a of the output gear 104 is set to 6.4. However, the embodiment is not limited thereto, and the modules of the second internal tooth 102a and the first external tooth 103b may be set to the same number and can be arbitrarily set. The modules of the first internal tooth 103d and the second external tooth 104a may be set to be different from each other and can be arbitrarily set. In this case, it can be desirable that the modules of the first internal tooth 103d and the second external tooth 104a are set to be larger than the modules of the second internal tooth 102a and the first external tooth 103b. Further, it can be desirable that the module of the second external tooth 104a is set to be smaller than the module of the first internal tooth 103d.

## Claims

1. A speed reducer-attached motor (1) comprising:
a motor part (10);
a fixation shaft (2) that is provided on a rotation shaft line (L1) which is a rotation center of the motor part (10); and
a hypocycloid speed reduction mechanism (100) to which a rotation output of the motor part (10) is transmitted,
wherein the hypocycloid speed reduction mechanism (100) comprises:
an eccentric part (67) that is provided on the fixation shaft (2) via a joint member (120), that has an outer circumferential surface (67a) having a center (O) at an eccentric position which is deviated from the rotation shaft line (L1), and that is configured to receive a power of the motor part (10) and is rotated;
a swing gear (103) that is fixed to the outer circumferential surface (67a) and that has a first internal tooth (103d) and a first external tooth (103b);
a fixed gear (102) that has a second internal tooth (102a) which is engaged with the first external tooth (103b) of the swing gear (103); and
an output gear (104) that has a second external tooth (104a) which is engaged with the first internal tooth (103d) of the swing gear (103), that is rotated concentrically with the fixation shaft (2), and that is configured to output a power to an external apparatus,
**characterized in that**:
each of modules of the first internal tooth (103d) and the second external tooth (104a) is set to be different from modules of the first external tooth (103b) and the second internal tooth (102a), and
a tooth number of the second external tooth (104a) is set to be the same as a tooth number of the first internal tooth (103d).

2. The speed reducer-attached motor (1) according to claim 1,
wherein each of the modules of the first internal tooth (103d) and the second external tooth (104a) is set to be larger than the modules of the first external tooth (103b) and the second internal tooth (102a).

3. The speed reducer-attached motor (1) according to claim 2,
wherein the module of the second external tooth (104a) is set to be smaller than the module of the first internal tooth (103d).

## Patentansprüche

1. Ein Motor mit Untersetzungsgetriebe (1) der umfasst:
ein Motorteil (10);
eine Befestigungsachse (2), vorgesehen an einer Rotationswelle (LI) bei der es sich um das Rotationszentrum des Motorteils (10) handelt; und
einen hypozykloiden Untersetzungsmechanismus (100), an den der Abtrieb des Motorteils (10) übertragen wird,
wobei der hypozykloide Untersetzungsmechanismus (100) umfasst:
einen exzentrischen Teil (67), vorgesehen an der Befestigungsachse (2) über ein Verbindungselement (120), mit einer Außenumfangsfläche (67a) deren Zentrum (O) sich an einer exzentrischen Position befindet, die von der Rotationswelle (LI) abweicht und dazu konfiguriert, Energie vom Motorteil (10) zu empfangen und das gedreht wird;
ein Schwenkgetriebe (103), befestigt an der Außenumfangsfläche (67a) und das einen ersten Innenzahn (103d) und einen ersten Außenzahn (103b) aufweist;
ein Festgetriebe (102), mit einem zweiten Innenzahn (102a), der in den ersten Außenzahn (103b) des Schwenkgetriebes (103) greift; und
ein Abtriebsgetriebe (104), mit einem zweiten Außenzahn (104a) der in den ersten Innenzahn (103d) des Schwenkgetriebes (103) greift, konzentrisch gedreht mit der Befestigungsachse (2), und dazu konfiguriert, Energie an ein externes Gerät abzugeben, **dadurch gekennzeichnet, dass**:
jedes der Module des ersten Innenzahns (103d) und des zweiten Außenzahns (104a) so eingestellt ist, dass es sich von Modulen des ersten Außenzahns (103b) und des zweiten Innenzahns (102a) unterscheidet, und
die Zahnzahl des zweiten Außenzahns (104a) so eingestellt ist, dass sie der Zahl des ersten Innenzahns (103d) entspricht.

2. Der Motor mit Untersetzungsgetriebe (1) nach Anspruch 1,
wobei jedes der Module des ersten Innenzahns (103d) und des zweiten Außenzahns so eingestellt ist, dass es breiter ist, als die Module des ersten Außenzahns (103b) und des zweiten Innenzahns (102a).

3. Der Motor mit Untersetzungsgetriebe (1) nach Anspruch 2,
wobei das Modul des zweiten Außenzahns (104a) so eingestellt ist, dass es kleiner ist, als die Module des ersten Innenzahns (103d).

## Revendications

1. Moteur (1) fixé sur un réducteur de vitesse, comprenant :
une partie de moteur (10) ;
un arbre de fixation (2) qui est prévu sur une ligne d'arbre de rotation (L1) qui est un centre de rotation de la partie de moteur (10) ; et
un mécanisme de réduction de vitesse hypocycloïde (100) auquel une sortie de rotation de la partie de moteur (10) est transmise,
dans lequel le mécanisme de réduction de vitesse hypocycloïde (100) comprend :
une partie excentrique (67) qui est prévue sur l'arbre de fixation (2) via un élément de joint (120), qui a une surface circonférentielle extérieure (67a) ayant un centre (O) dans une position excentrique qui est déviée de la ligne d'arbre de rotation (L1), et qui est configurée pour recevoir une puissance de la partie de moteur (10) et qui est mise en rotation ;
un engrenage oscillant (103) qui est fixé à la surface circonférentielle extérieure (67a) et qui a une première dent interne (103d) et une première dent externe (103b) ;
un engrenage fixe (102) qui a une seconde dent interne (102a) qui engrène avec la première dent externe (103b) de l'engrenage oscillant (103) ; et
un engrenage de sortie (104) qui a une seconde dent externe (104a) qui engrène avec la première dent interne (103d) de l'engrenage oscillant (103), qui est mis en rotation de manière concentrique avec l'arbre de fixation (2), et qui est configuré pour fournir une puissance à un appareil externe,
**caractérisé en ce que** :
chacun de modules de la première dent interne (103d) et de la second dent externe (104a) est réglé pour être différent de modules de la première dent externe (103b) et de la seconde dent interne (102a), et
un numéro de dent de la seconde dent externe (104a) est réglé pour être le même qu'un numéro de dent de la première dent interne (103d).

2. Moteur (1) fixé sur un réducteur de vitesse selon la revendication 1,
dans lequel chacun des modules de la première dent interne (103d) et de la seconde dent externe (104a) est réglé pour être plus grand que des modules de la première dent externe (103b) et de la seconde dent interne (102a).

3. Moteur (1) fixé sur un réducteur de vitesse selon la revendication 2,
dans lequel le module de la seconde dent externe (104a) est réglé pour être plus petit que le module de la première dent interne (103d).
